(19) Europäisches Patentamt
European Patent Office
Office européen des brevets

(11) **EP 3 625 191 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **18721395.4**

(22) Anmeldetag: **08.05.2018**

(51) Internationale Patentklassifikation (IPC):
**C04B 30/02** (2006.01)    **C04B 41/49** (2006.01)
**C04B 41/50** (2006.01)    **E04B 1/76** (2006.01)
**C04B 111/27** (2006.01)    **C04B 111/28** (2006.01)

(52) Gemeinsame Patentklassifikation (CPC):
(C-Sets verfügbar)
**C04B 30/02; C04B 41/009; C04B 41/52;**
**C04B 41/71;** C04B 2111/00612; C04B 2111/27;
C04B 2111/28; E04B 1/80          (Forts.)

(86) Internationale Anmeldenummer:
**PCT/EP2018/061761**

(87) Internationale Veröffentlichungsnummer:
**WO 2018/210605 (22.11.2018 Gazette 2018/47)**

(54) **VERFAHREN ZUR HERSTELLUNG EINER KERNHYDROPHOBEN WÄRMEDÄMMPLATTE MIT GEHÄRTETER OBERFLÄCHE**

METHOD FOR MANUFACTURE OF A HEAT INSULATION PLATE WITH HYDROPHOBIC CORE AND WITH HARDENED SURFACE

PROCÉDÉ DE MANUFACTURE D'UN PLAQUE D'ISOLATION THERMIQUE À NOYAU HYDROPHOBE AYANT UNE SURFACE DURCIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2017   EP 17171533**

(43) Veröffentlichungstag der Anmeldung:
**25.03.2020   Patentblatt 2020/13**

(73) Patentinhaber: **Kingspan Insulation Limited Leominster, Herefordshire HR6 9LA (GB)**

(72) Erfinder:
• **GEISLER, Matthias**
  **37176 N rten-Hardenberg (DE)**
• **MENZEL, Frank**
  **63456 Hanau (DE)**

(74) Vertreter: **Tomkins & Co**
  **5 Dartmouth Road**
  **Dublin 6, D06 F9C7 (IE)**

(56) Entgegenhaltungen:
**EP-A1- 0 002 502**          **EP-A1- 0 623 567**
**EP-A2- 2 204 513**          **EP-B1- 0 002 502**
**EP-B1- 0 623 567**          **WO-A1-2011/069923**
**WO-A1-2011/150987**          **WO-A1-2012/049018**
**WO-A1-2013/013714**          **WO-A1-2016/020215**
**DE-A1-102007 051 830**

(52) Gemeinsame Patentklassifikation (CPC): (Forts.)

**C04B 41/52, C04B 41/522, C04B 2103/65**

C-Sets
**C04B 30/02, C04B 14/022, C04B 14/024,
C04B 14/046, C04B 14/066, C04B 14/305,
C04B 14/308, C04B 14/324, C04B 14/42,
C04B 2103/56;
C04B 41/009, C04B 30/02, C04B 38/00;
C04B 41/52, C04B 41/4529;
C04B 41/52, C04B 41/4927, C04B 41/522;
C04B 41/52, C04B 41/4955;
C04B 41/52, C04B 41/5089, C04B 41/522;**

**Beschreibung**

Die Erfindung betrifft ein Verfahren zur Herstellung einer kernhydrophoben wärmedämmenden Platte.

Aus DE 3037409 A ist bekannt Wärmedämm-Materialien aus geschäumten Perliten mit Stearaten, Silikonaten, Wachsen und Fetten wasserabstoßend zu gestalten. Dies ist auf eine Oberflächenbelegung mit diesen Stoffen zurückzuführen. Die so behandelten Wärmedämm-Materialien sind zwar an deren Oberfläche hydrophobiert und für flüssiges Wasser abstoßend, absorbieren aber Wasserdampf, in Form von Luftfeuchtigkeit. Dies führt zu einer Verschlechterung der Dämmeigenschaften.

In EP 1988228 A1 wird ein Verfahren zur Verpressung zu hydrophoben, mikroporösen Wärmedämm-Formkörpern durch Zugabe von Organosilanen während eines Mischprozesses beschrieben. Die daraus resultierenden Wärmedämmformkörper sind durchgehend hydrophobiert. Als nachteilig an diesem Verfahren kann angesehen werden, dass eine Verpressung zu stabilen Platten nur sehr schwer möglich ist, insbesondere wenn bei der Hydrophobierung gasförmige Produkte entstehen.

In WO 2013/013714 A1 wird ein Verfahren zur Herstellung durchgehend hydrophobierter, Kieselsäure enthaltenden Wärmedämmformkörpern durch Behandlung entsprechender hydrophiler Formkörper mit gasförmigen Hydrophobierungsmitteln offenbart. Solche Wärmedämmkörper weisen zwar gute wärmedämmende Eigenschaften auf, haben aber den Nachteil, dass sie mit den wasserbasierten Beschichtungsmitteln nicht mehr effizient nachbehandelt werden können.

In WO 2012/049018 A1 wird ein Verfahren zur Erzeugung einer offenporigen, mit wässrigen Systemen benetzbaren, oberflächennahen Schicht eines mikroporösen, hydrophoben Wärmedämmformkörpers, bei dem man einen mikroporösen, hydrophoben Wärmedämmformkörper a) mit einer polaren, mit Wasser mischbaren Flüssigkeit behandelt oder b) einer kurzzeitigen Temperaturbehandlung aussetzt, offenbart. Außerdem betrifft dieses Dokument ein Verfahren zum Aufbringen einer Schicht aus einem wässerigen System auf die Oberfläche eines mikroporösen, hydrophoben Wärmedämmformkörpers bei dem man den mikroporösen, hydrophoben Wärmedämmformkörper a) mit einer polaren, mit Wasser mischbaren Flüssigkeit behandelt und im feuchten Zustand mit einem wässerigen System zur Reaktion bringt oder b) einer kurzzeitigen Temperaturbehandlung aussetzt und unmittelbar oder mit zeitlichem Abstand mit einem wässerigen System zur Reaktion bringt.

Es bestand daher die Aufgabe, ein technisch einfach durchführbares und wirtschaftliches Verfahren zur Herstellung einer durchgehend hydrophobierten Wärmedämmplatte bereitzustellen, die eine gute Haftung mit polaren, typischerweise wasserbasierten Materialien, wie beispielsweise wasserbasierte Farben, Beschichtungsmittel und dergleichen aufweist.

Offenbart ist eine durchgehend hydrophobierte Siliciumdioxid haltige Wärmedämmplatte, bei der die Druckspannung bei Bruch gemessen an der Plattenoberfläche höher ist als die Druckspannung bei Bruch gemessen an der Schnittoberfläche in dem mittleren Querschnitt der Platte parallel zur Plattenoberfläche, bei jeweils der gleichen Eindringtiefen der Messsonde in den Prüfkörper.

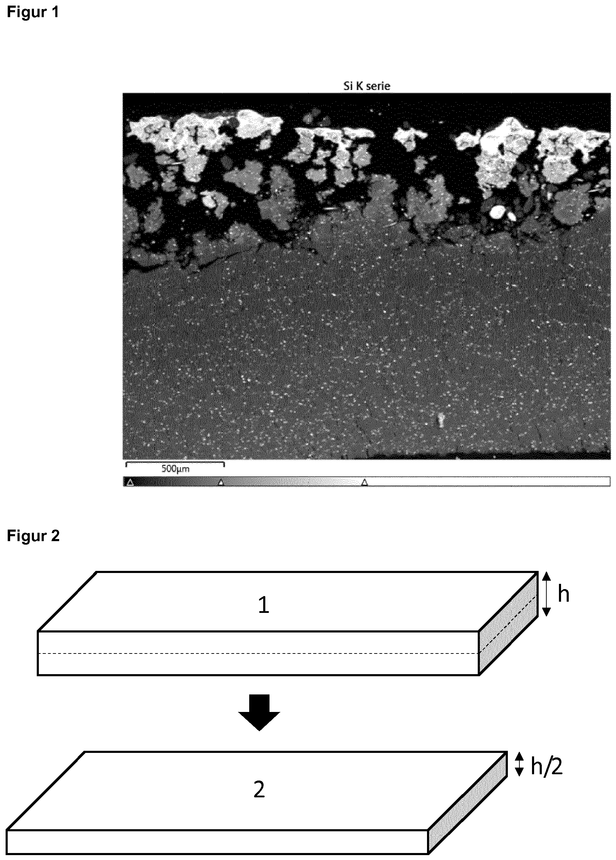

Die chemischen und mechanischen Materialeigenschaften an der Oberfläche und im Kern der offenbarten Platte können sich voneinander stark unterscheiden. Um diese auf vergleichbare Weise miteinander vergleichen zu können, wurden die Eigenschaften der äußeren Plattenoberfläche (Figur 2, 1) mit denen gemessen an der Schnittoberfläche in dem mittleren Querschnitt der Platte parallel zur Plattenoberfläche (Figur 2, 2) verglichen. Die äußere Plattenoberfläche kann dabei ohne weitere Vorbereitung, wie unten genauer beschrieben ist, direkt analysiert werden. Um eine innere Schnittoberfläche zu erzeugen, kann die zu analysierende Platte in der Mitte parallel zur äußeren Oberfläche geschnitten werden (Figur 2), so dass die daraus resultierende Platte eine halbierte Dicke und eine neue äußere Oberfläche (Figur 2, 2) aufweist, die die Eigenschaften des Kerns der ursprünglichen Platte weitergibt.

Der nachfolgend ferner beschriebene Wert der Druckspannung bei Bruch ermöglicht die Oberflächenhärte der untersuchenden Platten miteinander zu vergleichen. Eine solche Druckspannungsmessung erfolgt in Anlehnung an DIN EN 826:2013 "Wärmedämmstoffe für das Bauwesen - Bestimmung des Verhaltens bei Druckbeanspruchung" und ISO 6603-2:2000 "Kunststoffe - Bestimmung des Druckstoßverhaltens von festen Kunststoffen - Teil 2: Instrumentierter Schlagversuch". Standardmäßig wird nach DIN EN 826:2013 die Druckspannung von Platten bei 10% Stauchung bestimmt. Nach ISO 6603-2:2000 werden hingegen relativ harte Kunststoffkörper mit einer scharfen Testsonde bei Verwendung einer relativ hohen Stoßenergie durchgebrochen. Da die Platten typischerweise eine mechanisch härtere Oberfläche als der Plattenkern aufweisen, die aber absolut gesehen viel weicher als die Kunststoffoberfläche ist, wurde es für zweckmäßig gefunden eine neue Testmethode, die technische Lehre von DIN EN 826:2013 und ISO 6603-2:2000 vorteilhaft kombiniert, zur Bestimmung der Oberflächenhärte der Platten anzuwenden. Diese kombinierte Methode wird nachstehend detailliert beschrieben.

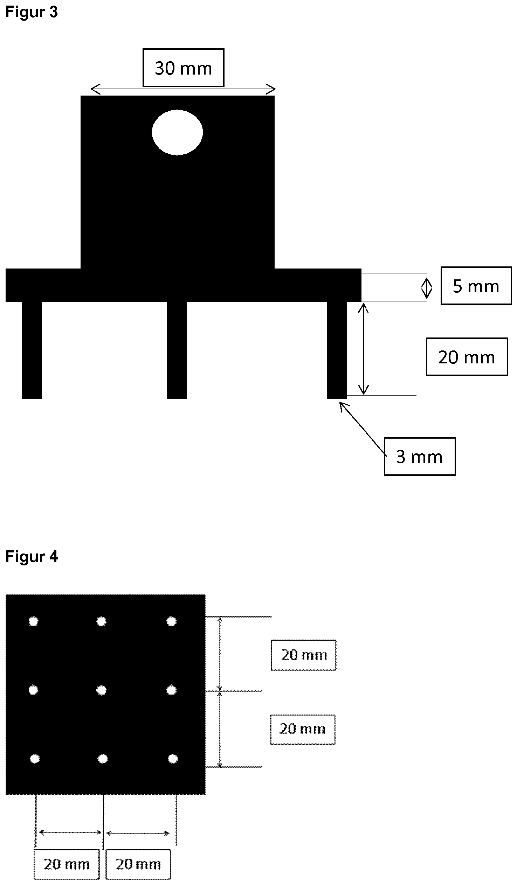

Die zu analysierende horizontal gelegene Platte quadratischer Fläche mit Kantenlänge von mindestens 100 mm und einer Dicke von wenigstens 10 mm wurde mittels einer über der Probe mittig zentrierten Druckpresse mit einem Druckstempel (Figur 3: seitliche Ansicht; Figur 4: Ansicht von unten) von oben nach unten gedrückt. Der Druckstempel weist 9 gleiche runde Messsonden mit jeweils 3 mm Durchmesser auf. Mit diesem Stempel wird mit einer Vorschubgeschwindigkeit von 4 mm/min in die Probenoberfläche hineingedrückt, dabei werden die entstehende Druckkraft (in N) und die Eindringtiefe (in mm) der Testsonden in die zu analysierende Oberfläche bestimmt. Die gemessene Druckkraft bei einer bestimmten Eindringtiefe der Messsonde in die zu analysierende Oberfläche lässt sich über die Fläche der Messsonde in die Druckspannung umrechnen:

$$\sigma_n = F_n/A \ ,$$

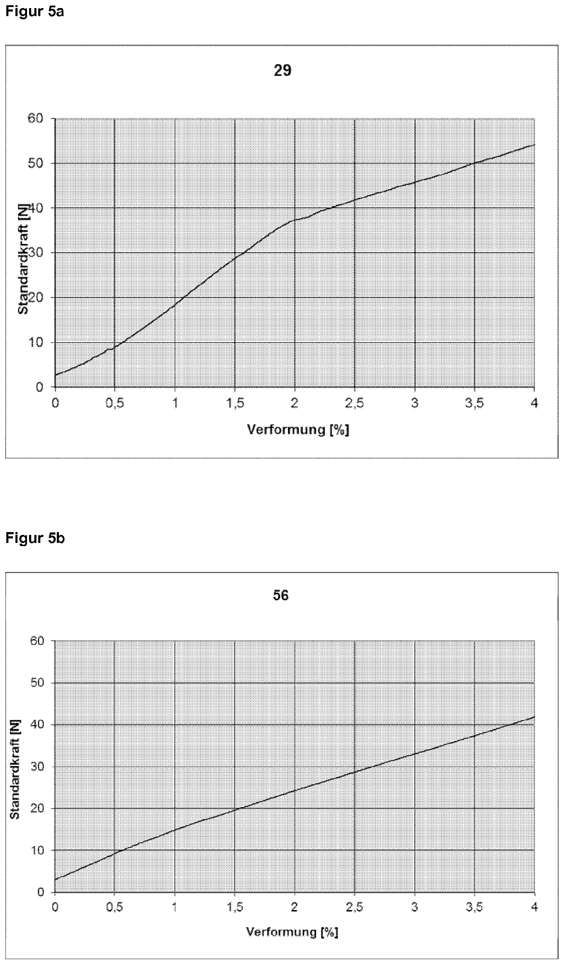

wobei $\sigma$ eine Druckspannung in Pa bei bestimmter Eindringtiefe n (in mm), $F_n$ - eine gemessene Druckkraft in N; A - eine Querschnittsfläche der Messsonde in m$^2$ (im vorliegenden Fall A = 9*7.07 mm$^2$ = 63.6*10$^{-6}$ m$^2$) ist. Auf Basis dieser Messung lässt sich eine Druckspannung - Eindringtiefenkurve erstellen, die für jeweilige Oberfläche charakteristisch ist. Betrachtet man die so erhaltene Druckspannung - Eindringtiefenkurve (Standardkraft [N] - Verformung [%]) für die äußere Plattenoberfläche der Platte, dann kann man leicht einen Knick (abrupte Änderung der Steigung) erkennen (Figur 5, a), das dem Bruch der harten Oberfläche unter der Messsonde entspricht. Analysiert man auf gleiche Weise den Kern der Platte an deren mittleren Schnittoberfläche, so beobachtet man hingegen keinen Knick in dem Druckspannung-Eindringtiefe Kurvenverlauf (Figur 5, b). Vergleicht man diese beiden Kurven nun miteinander, so kann man die Druckspannung bei Bruch an der äußeren Oberfläche der Platte auf die entsprechende Druckspannung bei Bruch gemessen an der inneren Oberfläche bei gleicher Eindringtiefe beziehen. Daraus entsteht ein Verhältnis (A/I), das eine relative Härte der äußeren Oberfläche (A) zu Härte des Kerns, "inneren" Oberfläche (I) wiedergibt. Dieses Verhältnis multipliziert mit 100 gibt ein entsprechendes Verhältnis der Außenhärte zu Innenhärte in Prozent. Der Wert von 100% entspricht der gleichen Härte des Materials an der äußeren Oberfläche und im Inneren der Platte. Der Wert von über 100% entspricht einer härteren äußeren Oberfläche als im Kern. Zieht man nun von diesem Verhältnis in Prozenten 100 ab, bekommt man eine Differenz zwischen der Außenhärte und Innenhärte in Prozent:

$$\Delta(A/I), \% = (100*A/I)-100$$

Die Druckspannung bei Bruch gemessen an der Plattenoberfläche der Platte ist höher als die Druckspannung bei Bruch gemessen an der Schnittoberfläche in dem mittleren Querschnitt der Platte parallel zur Plattenoberfläche bei jeweils gleichen Eindringtiefen der Messsonde in den Prüfkörper.

Bevorzugt ist die Druckspannung bei Bruch gemessen an der Plattenoberfläche um mindestens 20 %, besonders bevorzugt um mindestens 30% höher als die Druckspannung bei Bruch gemessen an der Schnittoberfläche in dem mittleren Querschnitt der Platte parallel zur Plattenoberfläche, bei jeweils gleichen Eindringtiefen der Messsonde in den Prüfkörper.

Die Wärmedämmplatte kann Trübungsmittel, Fasern und/oder feinteilige anorganische Zusatzstoffe enthalten.

Zur Armierung, also zur mechanischen Verstärkung, werden Fasern mit eingesetzt. Diese Fasern können anorganischen oder organischen Ursprungs sein und können bis zu 12 Gew.-% der Mischung betragen. Beispiele einsetzbarer anorganischer Fasern sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1-12 µm, besonders bevorzugt 6-9 µm und die Länge bevorzugt 1 - 25 mm, besonders bevorzugt 3-10 mm. Die Wärmedämmplatte kann mindestens ein IR-Trübungsmittel enthalten. Ein solches IR-Trübungsmittel verringert die Infrarot-Durchlässigkeit eines Wärmedämmungsmaterials und minimiert somit den Wärmeübergang durch Strahlung. Bevorzugt wird das IR-Trübungsmittel aus der Gruppe bestehend aus Siliciumkarbid, Titandioxid, Zirkoniumdioxid, Ilmenite, Eisentitanate, Eisenoxide, Zirkoniumsilikate, Manganoxide, Graphite, Ruße und Gemischen davon ausgewählt. Vorzugsweise weisen diese Trübungsmittel im Infrarot-Spektralbereich ein Maximum zwischen 1,5 und 10 µm auf. Die Partikelgröße der Trübungsmittel liegt in der Regel zwischen 0,1 bis 25 µm.

Die Wärmedämmplatte enthält mindestens 50 Gew.-% Siliciumdioxid. Dies liegt in Form einer pyrogenen Kieselsäure und/oder eines Aerogels vor.

Siliciumdioxid-Aerogelen werden durch spezielle Trocknungsverfahren von wässrigen Siliciumdioxidgelen hergestellt. Sie weisen ebenso eine sehr hohe Porenstruktur auf und sind daher hoch wirksame Dämmstoffe.

Pyrogene Kieselsäuren werden durch Flammenhydrolyse von flüchtigen Siliciumverbindungen wie organischen und anorganischen Chlorsilanen hergestellt. Bei diesem Verfahren wird ein verdampftes oder gasförmiges, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Weiterhin können der Wärmedämmplatte anorganische Füllmaterialien zugesetzt werden. Zum Einsatz kommen können verschiedene, synthetisch hergestellte Modifikationen von Siliciumdioxid, wie gefällte Kieselsäuren, Lichtbogenkieselsäuren, $SiO_2$-haltige Flugstäube, die durch Oxidationen von flüchtigem Siliciummonoxid bei der elektrochemischen Herstellung von Silicium oder Ferrosilicium entstehen. Ebenso möglich sind Kieselsäuren, die durch Auslaugen von Silikaten wie Calciumsilicat, Magnesiumsilicat und Mischsilicaten wie Olivin mit Säuren hergestellt werden. Ferner können natürlich vorkommende $SiO_2$-haltige Verbindungen wie Diatomenerden und Kieselguren zum Einsatz kommen. Ebenfalls können thermisch aufgeblähte Mineralien wie Perlite und Vermiculite, feinteilige Metalloxide wie Aluminiumoxid, Titandioxid, Eisenoxid zugesetzt werden.

Die Wärmedämmplatte enthält bevorzugt mindestens 60 Gew.-%, besonders bevorzugt mindestens 70 Gew.-% Siliciumdioxid und bevorzugt mindestens 5 Gew.-%, besonders bevorzugt mindestens 10 Gew.-%, ganz besonders bevorzugt mindestens 15 Gew.-% eines IR-Trübungsmittels.

Eine besondere Ausführungsform sieht vor, dass die Wärmedämmplatte 55 - 90 Gew.-%, pyrogenes Siliciumdioxid und/oder Siliciumdioxidaerogel, 5 - 20 Gew.-%, vorzugsweise 7 - 15 Gew.-%, Trübungsmittel, 5-35 Gew.-%, vorzugsweise 10-30 Gew.-% feinteilige anorganische Zusatzstoffe und 0 - 12 Gew.-%, vorzugsweise 1-5 Gew.-%, Fasern enthält.

Die Wärmedämmplatte kann von 0,05 bis 15 Gew.-% Kohlenstoff enthalten, der Kohlenstoffgehalt beträgt bevorzugt von 0,1 bis 10 Gew.-%, besonders bevorzugt von 0,5 bis 8 Gew.-%. Der Kohlenstoffgehalt kann dabei als Kennzahl des Oberflächenbehandlungsumfangs verwendet werden.

Der Kohlenstoffgehalt kann beispielsweise durch Trägergasheisextraktionsanalyse, beispielsweise mittels der Geräte vom Typ CS 244 oder CS 600 der Firma LECO bestimmt werden. Dabei wird Probenmaterial in einem Keramiktiegel eingewogen, mit Verbrennungszuschlagen versehen und in einem Induktionsofen unter einem Sauerstoffstrom erhitzt. Der vorhandene Kohlenstoff wird hierbei zu $CO_2$ oxidiert. Diese Gasmenge wird über Infrarotdetektoren quantifiziert. Auch die anderen zur Bestimmung des Kohlenstoffes geeigneten Testmethoden können eingesetzt werden.

Die Wärmedämmplatte weist bevorzugt eine Dicke von 5 bis 500 mm, besonders bevorzugt von 10 bis 300 mm, ganz besonders bevorzugt von 20 bis 200 mm auf.

Die Wärmedämmplatte ist bevorzugt mit einer Beschichtung umhüllt, die eine höhere Materialdichte als Kern der Platte aufweist. Eine solche Beschichtung kann beispielsweise mittels REM-EDX-Analyse (energy dispersive X-ray spectroscopy) an der Querschnitt der Wärmedämmplatte beobachtet und analysiert werden, wie in Figur 1 dargestellt. Eine heller als der Kern der Platte erscheinende Beschichtung der Platte deutet auf eine höhere Materialdichte hin bei Analyse der Si K Serie. Die durchschnittliche Dicke einer solchen Beschichtung beträgt vorzugsweise von 100 bis 2000 $\mu$m, besonders bevorzugt von 200 bis 1000 $\mu$m.

Die Oberfläche der Wärmedämmplatte weist vorzugsweise eine relativ hohe Rauheit auf, wie es aus der Figur 1 ersichtlich ist. Die Rauheit der Plattenoberfläche kann nach DIN EN ISO 4287 analysiert werden, dabei weist die Wärmedämmplatte bevorzugt eine Riefentiefe $R_v$ von 100 bis 500 $\mu$m, besonders bevorzugt von 150 bis 400 $\mu$m und einen mittleren Abstand der Riefen $R_{sm}$ bevorzugt von 100 bis 5000 $\mu$m, besonders bevorzugt von 200 bis 4000 $\mu$m, ganz besonders bevorzugt von 300 bis 3000 $\mu$m auf.

Die Wärmedämmplatte ist durchgehend hydrophobiert, das heißt sowohl der Kern der Platte als auch deren Oberfläche sind beispielsweise mit einem Hydrophobierungsmittel so behandelt, dass die Platte sowohl innen als auch außen hydrophobe Eigenschaften aufweist.

Die Begriff "hydrophob" und "hydrophobiert" im Sinne der vorliegenden Erfindung sind äquivalent und beziehen sich auf die Partikel mit einer geringen Affinität zu polaren Medien wie Wasser. Die hydrophilen Partikeln weisen dagegen eine hohe Affinität zu polaren Medien wie Wasser auf. Die Hydrophobie der hydrophoben Materialien, auch Hydrophobizität genannt, kann üblicherweise durch die Aufbringung entsprechender unpolaren Gruppen an die Kieselsäureoberfläche erreicht werden. Das Ausmaß der Hydrophobizität einer pulverförmigen hydrophoben Kieselsäure kann unter anderem durch ihre Methanolbenetzbarkeit bestimmt werden, wie beispielsweise in WO2011/076518 A1, Seiten 5-6, näher beschrieben. In reinem Wasser, trennt sich eine hydrophobe Kieselsäure vollständig vom Wasser ab und schwimmt auf dessen Oberfläche ohne sich mit dem Lösungsmittel zu benetzen. In reinem Methanol dagegen, verteilt sich eine hydrophobe Kieselsäure im ganzen Lösungsmittelvolumen, es findet eine vollständige Benetzung statt. Bei der Messung der Methanolbenetzbarkeit wird ein maximaler Gehalt an Methanol in einem Methanol-Wasser Testgemisch bestimmt, bei dem noch keine Benetzung der Kieselsäure stattfindet, also 100% der eingesetzten Kieselsäure sich nach dem Kontakt mit dem Testgemisch von dem Testgemisch separiert, nicht benetzt bleibt. Dieser Gehalt an Methanol in dem Methanol-Wasser Gemisch in Gew.-% wird Methanolbenetzbarkeit genannt. Je höher eine solche Methanolbenetzbarkeit, desto hydrophober ist die Kieselsäure. Je niedriger die Methanolbenetzbarkeit, desto geringer ist die Hydrophobie und desto höher ist die Hydrophilie des Materials.

Die oben beschriebene Methanolbenetzbarkeit kann auch zur qualitativen und auch quantitativen Charakterisierung der Hydrophobie einer Plattenoberfläche benutzt werden. Dabei wird eine zu analysierende horizontal gelegene Oberfläche mit einem Tropfen des Methanol-Wassergemisches behandelt. Dabei kann das Tropfen von der Oberfläche abperlen, also in Form eines Tropfens mit einem Kontaktwinkel von circa 90 bis 180 ° an der Oberfläche bleiben oder diese benetzen, das heißt sich auf der Oberfläche verteilen und einen Kontaktwinkel von kleiner als 90 ° mit der Oberfläche bilden oder ganz ins Material der Platte eingesaugt werden. Eine Testoberfläche kann mit einer Reihe von Methanol-Wassergemischen mit unterschiedlichen Konzentrationen behandelt werden. Der maximale Gehalt an Methanol in einem Methanol-Wasser Testgemisch, bei dem noch keine Benetzung der Oberfläche stattfindet, wird Methanolbenetzbarkeit der Oberfläche, $OB_{MeOH}$, %, genannt.

Die Wärmedämmplatte weist bevorzugt eine Plattenoberfläche mit einer Methanolbenetzbarkeit von mindestens 5 Gew.-%, besonders bevorzugt von 10 bis 90 Gew.-%, ganz besonders bevorzugt von 20 bis 80 Gew.-% Methanol in Methanol-Wassergemisch auf.

Die Schnittoberfläche in dem mittleren Querschnitt der Wärmedämmplatte parallel zur Plattenoberfläche weist bevorzugt eine Methanolbenetzbarkeit von mindestens 5 Gew.-%, besonders bevorzugt von 10 bis 90 Gew.-%, ganz besonders bevorzugt von 20 bis 80 Gew.-% Methanol in Methanol-Wassergemisch auf.

Die Wärmedämmplatte weißt eine gute Haftung mit polaren Beschichtungsmittel, insbesondere wasserbasierten Materialien, auf. Die Wärmedämmplatte kann beispielsweise zur deren Behandlung mit einer wasserbasierten Farbe, einem wässrigen Beschichtungsmittel, Klebstoff und/oder einer wässrigen Zement-, Putz- oder Mörtel haltigen Formulierung verwendet werden.

Die Wärmedämmplatte, in einer unbeschichteten oder zusätzlich beschichteten Form, kann besonders bevorzugt für Außendämmung von Gebäuden eingesetzt werden. Gegenstand der Erfindung ist gemäss Anspruch 1 ein Verfahren zur Herstellung einer durchgehend hydrophobierten Siliciumdioxid haltigen Wärmedämmplatte, umfassend die folgenden Schritte:

a) Behandlung einer hydrophilen Siliciumdioxid haltigen Platte mit einem Silicium haltigen Oberflächenmodifizierungsmittel;

b) Trocknung und/oder thermische Behandlung der mit Oberflächenmodifizierungsmittel behandelten Platte unter Bildung einer beschichteten Platte;

c) Hydrophobierung der beschichteten Platte mit einem Hydrophobierungsmittel, wobei die Wärmedämmplatte mindestens 50 Gew.-% Siliciumdioxid in Form einer pyrogenen Kieselsäure und/oder eines Aerogels enthält und wobei die Druckspannung bei Bruch gemessen an der Plattenoberfläche höher ist als die Druckspannung bei Bruch gemessen an der Schnittoberfläche in dem mittleren Querschnitt der Platte parallel zur Plattenoberfläche, bei jeweils gleichen Eindringtiefen der Messsonde in den Prüfkörper.

Das in Schritt a) des erfindungsgemäßen Verfahrens eingesetzte Silicium haltige Oberflächenmodifizierungsmittel wird bevorzugt aus der Gruppe bestehend aus Silicasol, Siloxan-Oligomere, Silikate und Wasserglas ausgewählt. Dieses Oberflächenmodifizierungsmittel kann in Schritt a) ohne Lösungsmittel oder besonders bevorzugt als eine Lösung eingesetzt werden. Besonders bevorzugt wird in Schritt a) eine Lösung enthaltend mindestens ein Oberflächenmodifizierungsmittel und mindestens ein Lösungsmittel ausgewählt aus der Gruppe bestehend aus Wasser, Alkohole, Ether und Ester, eingesetzt. Ganz besonders bevorzugt wird in diesem Schritt des Verfahrens eine wässrige Lösung des Oberflächenmodifizierungsmittels eingesetzt.

In einer besonderen Ausführungsform kann in Schritt a) des Verfahrens das Silicium haltige Oberflächenmodifizierungsmittel zusammen mit einem Fasermaterial auf die Plattenoberfläche aufgetragen werden. Alternativ kann ein solches Fasermaterial nach der Behandlung mit dem Oberflächenmodifizierungsmittel aufgetragen werden. Besonders bevorzugt wird auf die in Schritt a) mit einem Oberflächenmodifizierungsmittel behandelte Platte eine Deckschicht bestehend aus Fasern aufgetragen. Dies kann beispielsweise ein Vlies oder eine poröse Folie darstellen. Die zuvor beschriebenen Fasermaterialien, weiterhin vereinfacht als Fasern bezeichnet, können anorganischen oder organischen Ursprungs sein. Beispiele einsetzbarer anorganischer Fasermaterialien sind Glaswolle, Steinwolle, Basalt-Fasern, Schlacken-Wolle und keramische Fasern, die aus Schmelzen von Aluminium und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1-200 $\mu$m, besonders bevorzugt 5-100 $\mu$m, und das Flächengewicht beträgt bevorzugt 10-1000 $g/m^2$, besonders bevorzugt 15-500 $g/m^2$.

Die relative Menge des eingesetzten Oberflächenmodifizierungsmittels kann einerseits die Dicke der Beschichtung und damit die mechanischen und chemischen Eigenschaften der Oberfläche bestimmen und andererseits die Gesamtkosten der hergestellten Platten wesentlich beeinflussen. Besonders bevorzugt wird in Schritt a) des erfindungsgemäßen Verfahrens so viel Oberflächenmodifizierungsmittel eingesetzt, dass die in Schritt b) erzeugte Schicht eine mittlere Dicke von 100 bis 2000 $\mu$m aufweist. Die mittlere Schichtdicke kann beispielsweise aus einer REM-EDX-Aufnahme, als Mittelwert aus mindestens 100 zufällig ausgewählten Stellen an der Oberfläche optisch bestimmt werden.

In Schritt c) des erfindungsgemäßen Verfahrens kann mindestens ein Organosilan ausgewählt aus der Gruppe bestehend aus $R_n$-Si-$X_{4-n}$, $R_3$Si-Y-Si$R_3$, $R_nSi_nO_n$, $(CH_3)_3$-Si-$(O$-Si$(CH_3)_2)_n$-OH, HO-Si$(CH_3)_2$-$(O$-Si$(CH_3)_2)_n$-OH, mit n = 1-8; R = -H, -$CH_3$, -$C_2H_5$; X = -Cl, - Br; -$OCH_3$, -$OC_2H_5$, -$OC_3H_8$, Y= NH, O als Hydrophobierungsmittel eingesetzt werden. Vorzugsweise wird ein Hydrophobierungsmittel aus der Gruppe bestehend aus $CH_3SiCl_3$, $(CH_3)_2SiCl_2$, $(CH_3)_3SiCl$, $C_2H_5SiCl_3$, $(C_2H_5)_2SiCl_2$, $(C_2H_5)_3SiCl$, $C_3H_7SiCl_3$, $CH_3Si(OCH_3)_3$, $(CH_3)_2Si(OCH_3)_2$, $(CH_3)_3SiOCH_3$, $C_2H_5Si(OCH_3)_3$, $(C_2H_5)_2Si(OCH_3)_2$, $(C_2H_5)_3SiOCH_3$, $C_8H_{15}Si(OC_2H_5)_3$, $C_8H_{15}Si(OCH_3)_3$, $(H_3C)_3SiNHSi(CH_3)_3$ $(CH_3)_3SiOSi(CH_3)_3$, $(CH_3)_8Si_4O_4$ [Octamethyltetracyclosiloxan], $(CH_3)_6Si_3O_3$ [Hexamethyltricyclosiloxan] und $(CH_3)_3Si(OSi(CH_3)_2)_4OH$ [niedrigmolekulares Polysiloxanol] und Mischungen hiervon ausgewählt. Besonders bevorzugt sind $(CH_3)_3SiCl$, $(CH_3)_2SiCl_2$, $CH_3SiCl_3$, $(CH_3)_3SiNHSi(CH_3)_3$ und $(CH_3)_8Si_4O_4$ einzusetzen.

Besonders bevorzugt wird dabei ein bei Temperatur der Durchführung des Schrittes c) gasförmiges Hydrophobierungsmittel eingesetzt. Ganz besonders bevorzugt werden als Hydrophobierungsmittel flüssige bei 25 °C Verbindungen mit wenigstens einer Alkylgruppe und einem Siedepunkt bei Normaldruck von weniger als 200°C eingesetzt.

Das Verfahren kann auch durchgeführt werden, indem man polare Substanzen während oder nach dem Einbringen des Hydrophobierungsmittels in Schritt c) einsetzt. Bevorzugt können dies Wasser, Alkohole und/oder Wasserstoffhalogenide sein.

Die Ausführung einzelner Schritte des erfindungsgemäßen Verfahrens kann einmalig oder mehrmals nacheinander erfolgen. Schritte a) und b) des erfindungsgemäßen Verfahrens können beispielsweise mehrmals abwechselnd hintereinander ausgeführt werden, bevor Schritt c) ausgeführt wird. Andererseits kann nach Schritt c) zusätzlich mindestens einmal Schritt a) und/oder b) ausgeführt werden.

Es kann vorteilhaft sein, dass die Temperatur von 20°C bis 300°C während des Verfahrens eingestellt ist. Hierdurch kann die Behandlungszeit gesteuert werden. Abhängig von der Art des eingesetzten Oberflächenmodifizierungsmittel und Hydrophobierungsmittel kann es besonders vorteilhaft sein eine Temperatur von 50 bis 200°C zu wählen.

Nach Beendigung der Behandlung mit Hydrophobierungsmittel in Schritt c) des Verfahrens können die eventuell überschüssigen Organosilane und Reaktionsprodukte aus der nun hydrophoben Wärmedämmplatte durch Aufheizen entfernt werden.

### Beispiele

### Analyse der äußeren Oberfläche und Kerneigenschaften

Die äußere Plattenoberfläche (Figur 2, 1) wurde ohne weitere Vorbereitung, wie unten beschrieben direkt analysiert. Die chemischen und mechanischen Eigenschaften des Plattenkerns wurden hingegen an einer mittleren Querschnittoberfläche der Platte (Figur 2,2) bestimmt. Hierzu wurden die zu analysierenden Platten in der Mitte parallel zur äußeren Oberfläche geschnitten (Figur 2), so dass die daraus resultierende Platte eine halbierte Dicke und eine neue äußere Oberfläche (Figur 2, 2) aufweist, die Eigenschaften des Kerns der ursprünglichen Platte weitergibt.

### Bestimmung der Druckspannung bei Bruch und $\Delta$(A/l), %

Die zu analysierende horizontal gelegene Platte quadratischer Fläche mit einer Kantenlänge von mindestens 100 mm und einer Dicke von wenigstens 10 mm wurde mittels einer über der Probe mittig zentrierten Druckpresse mit einem Druckstempel (Figur 3: seitliche Ansicht; Figur 4: Ansicht von unten) von oben nach unten gedrückt. Der Druckstempel weist 9 gleiche runde Messsonden mit jeweils 3 mm Durchmesser auf. Mit Diesem Stempel wird mit einer Vorschubgeschwindigkeit von 4 mm/min in die Probenoberfläche hineingedrückt, dabei werden die entstehende Druckkraft (in N) und die Eindringtiefe (in mm) der Testsonden in die zu analysierende Oberfläche bestimmt. Die gemessene Druckkraft bei einer bestimmten Eindringtiefe der Messsonde in die analysierende Oberfläche lässt sich über die Fläche der Messsonde in die Druckspannung umrechnen:

$$\sigma_n = F_n/A \ ,$$

wobei $\sigma$ eine Druckspannung in Pa bei bestimmter Eindringtiefe n (in mm), $F_n$ - eine gemessene Druckkraft in N; A - eine Querschnittsfläche der Messsonde in $m^2$ (im vorliegenden Fall A = 9*7.07 $mm^2$ = 63.6*$10^{-6}$ $m^2$) ist. Auf Basis dieser Messung lässt sich eine Druckspannung - Eindringtiefenkurve erstellen, die für jeweilige Oberfläche charakteristisch ist. Betrachtet man die so erhaltene Druckspannung - Eindringtiefenkurve (Standardkraft [N] - Verformung [%]) für die äußere Plattenoberfläche der Platte, dann kann man leicht einen Kick (abrupte Änderung der Steigung) erkennen (Figur 5, a), das dem Bruch der harten Oberfläche unter der Messsonde entspricht. Analysiert man auf gleiche Weise den Kern der Platte an deren mittleren Schnittoberfläche, so beobachtet man hingegen keinen Knick in dem Druckspannung-Eindringtiefe Kurvenverlauf (Figur 5, b). Vergleicht man diese beiden Kurven nun miteinander, so kann man die Druckspannung bei Bruch an der äußeren Oberfläche der Platte auf die entsprechende Druckspannung bei Bruch gemessen an der inneren Oberfläche bei gleicher Eindringtiefe beziehen. Daraus entsteht ein Verhältnis, das eine relative Härte der äußeren Oberfläche zu Härte des Kerns wiedergibt. Dieses Verhältnis multipliziert mit 100 gibt ein entsprechendes Verhältnis der Außenoberflächenhärte zu Innenoberflächenhärte in Prozent. Zieht man von diesem Verhältnis in Prozenten 100 ab, bekommt man eine Differenz zwischen der Außenoberflächenhärte und Innenoberflächenhärte in Prozent, die in der Tabelle 1 aufgeführt ist:

$$\Delta(A/I), \% = (100*A/I)-100$$

**Messung der Rauheit, $R_v$, $R_{sm}$**

Die Rauheit der Oberfläche wurde nach DIN EN ISO 4287 bestimmt, dabei wurden die Kennwerte Riefentiefe $R_v$ und Riefenabstand $R_{sm}$ ausgewertet. Es folgt eine Beschreibung des verwendeten Gerätes und dessen Einstellung hierzu:

| Parameter | Wert |
|---|---|
| Messgerät | Alicona InfiniteFocus |
| Messprinzip | Fokusvariation |
| Objektiv (Vergrößerung) | 5x |
| vertikale Auflösung | 2 $\mu$m |
| laterale Auflösung | 5 $\mu$m |
| koaxiale Beleuchtung (Lichtquelle: 1,0) | 1,25 ms |
| Kontrast | 2,3 |
| Lichtverstärkung | 1,0 |
| Ringlicht | an (100%) |
| Datennachbearbeitung | Eliminieren von Ausreißern (0,1) |
| Messstrecke ln | 40 mm |
| Grenzwellenlänge $\lambda c$ | 8 mm |

**Bestimmung der Oberflächenhydrophobie, $OB_{MEOH}$,%**

Die zu analysierende horizontal gelegene Oberfläche wurde mit einem Tropfen des Wassers oder Methanol-Wassergemisches an mindestens 5 unterschiedlichen Stellen behandelt. Das Aufsetzen eines Tropfens erfolgte mittels einer geeigneten Pipette. Die an die Oberfläche abgesetzten Tropfen wurden nach 1 Stunde Stehzeit optisch beurteilt. Dabei konnten die Tropfen als Ganzes mit einem Kontaktwinkel von circa 90 bis 180 ° an der Oberfläche bleiben oder diese benetzen, das heißt sich auf der Oberfläche verteilen und einen Kontaktwinkel von kleiner als 90 ° mit der Oberfläche bilden oder in das Material der Platte ganz eingesaugt werden. Das entsprechende Verhalten der meisten Tropfen an der Oberfläche wurde als das erste qualitative Ergebnis ausgewertet. Eine Testreihe mit den Tropfen mit unterschiedlichen Methanol-Wassergemischen ergab eine quantitative Aussage über das Ausmaß der Oberflächenhydrophobie. Der maximale Gehalt an Methanol in Gew.-% in einem Methanol-Wasser Testgemisch, bei dem noch keine Benetzung der Oberfläche stattfindet, wird Methanolbenetzbarkeit der Oberfläche $OB_{MEOH}$,% genannt.

**Wärmeleitfähigkeit**

Die Wärmeleitfähigkeit der Platten wurde mit einem Plattengerät gemäß EN 12667:2001 bei Raumtemperatur bestimmt.

**Beschichtung der hergestellten Platten**

Die Platten wurden mit einer wasserbasierten Silikatfarbe (Bauhaus, Silikatfarbe "Swingcolor", Silikat Innenfarbe, matt/weiß) mit einem Pinsel durch Streichen auf die Plattenoberfläche aufgebracht, dann wurde die Farbenschicht bei Raumtemperatur getrocknet. Die Haftung der Farbe an der Oberfläche wurde sowohl beim Auftragen als auch nach der Trocknung qualitativ bewertet.

Alle Platten, die eine gute Haftung der Silikatfarbe aufwiesen (Beispiele 1-6), konnten auch sehr erfolgreich mit Zementmörtel beschichtet werden. Der letzte wurde dabei direkt nach Anrühren mit Wasser zu einer pastösen Form mittels eines Zahnspachtels auf die gehärtete Platte aufgestrichen.

**Vergleichsbeispiel 1**

In einem auf 100°C geheizten Exsikkator wird ein mikroporöses Wärmedämmstoffpaneel mit einer Größe von 250 x 250 x 20 mm, einer Rohdichte von 170 kg/m³, und einer Zusammensetzung von 80,0 Gew.-% pyrogener Kieselsäure mit einer BET-Oberfläche von 200m²/g, 16,0 Gew.-% Siliciumkarbid und 4,0 Gew.-% Glasfasern (Durchmesser = 9μm; Länge= 6mm) vorgelegt. Der Druck im Exsikkator wird mit Hilfe einer Wasserstrahlpumpe auf 15 mbar reduziert. Anschließend wird langsam soviel dampfförmiges Hexamethyldisilazan in den Exsikkator gegeben, bis der Druck auf 300 mbar steigt. Nach einer Stehzeit von 1 Stunde unter Silanatmosphäre wird die hydrophobierte Platte gekühlt und entlüftet.

Die so hergestellte Platte war durchgehend hydrophob, wies die gleiche Härte der äußeren Oberfläche und des Kerns und eine relativ geringe Rauheit der Oberfläche auf (Tabelle 1). Diese Platte wies eine sehr schlechte Haftung der Farbenschicht auf, sowohl bei der Auftragung der Silikatfarbe als auch nach deren Austrocknung.

**Vergleichsbeispiel 2**

Eine wie im Vergleichsbeispiel 1 beschrieben hergestellte hydrophobierte Platte wurde mittels einer Airless-Sprühpistole mit Wasser (300 g/m²) bei 25 °C besprüht, anschließend bei ca. 25 °C in einem Laborabzug getrocknet.

Die so hergestellte Platte war durchgehend hydrophob, wies ungefähr gleiche Härte der äußeren Oberfläche und des Kerns und einer etwas höherer als im Vergleichsbeispiel 1 Rauheit der Oberfläche auf (Tabelle 1). Diese Platte wies eine sehr schlechte Haftung der Farbenschicht sowohl bei der Auftragung der Silikatfarbe als auch nach deren Austrocknung.

**Vergleichsbeispiel 3**

Ein mikroporöses Wärmedämmstoffpaneel mit einer Größe von 250 x 250 x 20 mm, einer Rohdichte von 170 kg/m³, und einer Zusammensetzung von 80,0 Gew.-% pyrogener Kieselsäure mit einer BET-Oberfläche von 200m²/g, 16,0 Gew.-% Siliciumkarbid und 4,0 Gew.-% Glasfasern (Durchmesser = 9μm; Länge= 6mm) wurde fünfmal nacheinander mit 100 g/m² Kieselsol IDISIL® 1530 (30 Gew.-% SiO₂ in Wasser, Partikelgröße 15 nm, Evonik Resource Efficiency GmbH) beschichtet und jeweils getrocknet. Danach wurde die Platte wie in Vergleichsbeispiel 1 beschrieben im Exsikkator mit gasförmigem Hexamethyldisilazan hydrophobiert.

Die so hergestellte Platte war nicht durchgehend hydrophob. Die äußere Oberfläche war hydrophob, während der Kern der Platte nicht. Die äußere Oberfläche war um 80% härter als der Kern der Platte (Tabelle 1). Die Rauheit der Oberfläche wurde nicht bestimmt, die Platte wirkte aber optisch sehr glatt. Diese Platte wies eine schlechte Haftung der Farbenschicht sowohl bei der Auftragung der Silikatfarbe als auch nach deren Austrocknung auf.

**Beispiel 1**

Ein mikroporöses Wärmedämmstoffpaneel mit einer Größe von 250 x 250 x 50 mm, einer Rohdichte von 170 kg/m³, und einer Zusammensetzung von 80,0 Gew.-% pyrogener Kieselsäure mit einer BET-Oberfläche von 200m²/g, 16,0 Gew.-% Siliciumkarbid und 4,0 Gew.-% Glasfasern (Durchmesser = 9μm; Länge= 6mm) wurde mittels einer Airless-Sprühpistole mit 300 g/m² Hydrosil® 2627 (wasserbasiertes aminofunktionelles oligomeres Siloxan, Evonik Resource Efficiency GmbH) bei 25 °C besprüht, anschließend bei ca. 25 °C in einem Laborabzug getrocknet. Danach wurde die Platte wie in Vergleichsbeispiel 1 beschrieben im Exsikkator mit gasförmigem Hexamethyldisilazan hydrophobiert.

Die so hergestellte Platte war durchgehend hydrophob. Die äußere Oberfläche war um 75% härter als der Kern der Platte (Tabelle 1). Diese Platte wies eine gute Haftung der Farbenschicht auf, sowohl bei der Auftragung der Silikatfarbe als auch nach deren Austrocknung.

**Beispiel 2**

Die Platte wurde wie in Beispiel 1 hergestellt, mit dem einzigen Unterschied, dass für die Beschichtung der hydrophilen Platte Hydrosil® 1153 (wasserbasiertes aminofunktionelles oligomeres Siloxan, Evonik Resource Efficiency GmbH) eingesetzt wurde.

Die so hergestellte Platte war durchgehend hydrophob. Die äußere Oberfläche war um 40% härter als der Kern der Platte (Tabelle 1). Diese Platte wies eine gute Haftung der Farbenschicht sowohl bei der Auftragung der Silikatfarbe als auch nach deren Austrocknung.

**Beispiel 3**

Die Platte wurde wie in Beispiel 1 hergestellt, mit dem einzigen Unterschied, dass für die Beschichtung der hydrophilen Platte Kieselsol IDISIL® 1530 (30 Gew.-% $SiO_2$ in Wasser, Partikelgröße 15 nm, Evonik Resource Efficiency GmbH) eingesetzt wurde.

Die so hergestellte Platte war durchgehend hydrophob. Die äußere Oberfläche war um 30% härter als der Kern der Platte (Tabelle 1). Diese Platte wies eine gute Haftung der Farbenschicht sowohl bei der Auftragung der Silikatfarbe als auch nach deren Austrocknung.

**Beispiel 4**

Die Platte wurde wie in Beispiel 1 hergestellt, mit dem Unterschied, dass für die Beschichtung der hydrophilen Platte Protectosil® WS 808 (wasserbasiertes Propylsilikonat/-silikat, Evonik Resource Efficiency GmbH) eingesetzt wurde, anschließend wurde auf die beschichtete Oberfläche ein Glasvlies mit einer Flächendichte von 30 g/m2 und einer Vliesdicke von 0,3 mm appliziert und dann die Beschichtung getrocknet.

Die so hergestellte Platte war durchgehend hydrophob. Die äußere Oberfläche war um 120% härter als der Kern der Platte (Tabelle 1). Diese Platte wies eine gute Haftung der Farbenschicht sowohl bei der Auftragung der Silikatfarbe als auch nach deren Austrocknung.

**Beispiel 6**

Eine wie im Vergleichsbeispiel 1 hergestellte mit Hexamethylsilazan hydrophobierte Platte wurde mittels einer Airless-Sprühpistole mit 300 g/m² Dynasilan® AR (ethanolbasierter Kieselsäureester - Hybridbinder mit zusätzlich eingelagerten kolloidalen $SiO_2$-Partikeln, Evonik Resource Efficiency GmbH) bei 25 °C besprüht, anschließend bei ca. 25 °C in einem Laborabzug getrocknet.

Die so hergestellte Platte war durchgehend hydrophob. Die äußere Oberfläche war um 50% härter als der Kern der Platte (Tabelle 1). Diese Platte wies eine gute Haftung der Farbenschicht bei der Auftragung der Silikatfarbe auf.

Alle Platten (Beispiele 1-6) wiesen eine Wärmeleitfähigkeit von weniger als 20 mW/(m*K) auf.

**Tabelle 1**

| | Außenoberflächenhydrophobie / $OB_{MEOH}$, % | Inneroberflächenhydrophobie / Benetzung mit Wasser | Außen/ Innenhärte, $\Delta(A/I)$, % | Riefentiefe $R_v$ nach DIN EN ISO 4287 (Bereich / Anzahl der Messungen), $\mu m$ | Riefenabstand nach DIN EN ISO 4287 $R_{sm}$ (Bereich / Anzahl der Messungen), $\mu m$ | Haftung der wässrigen Silikatfarbe beim Auftragen |
|---|---|---|---|---|---|---|
| Vergleichsbeispiel 1 | ja / 60 | ja | 0 | 70-200 / 14 | 400-2000 /14 | schlecht |
| Vergleichsbeispiel 2 | ja / 60 | ja | 0 | 350-520 / 2 | 500-710 / 2 | schlecht |
| Vergleichsbeispiel 3 | ja / n.b. | nein | 80 | n.b. | n.b. | schlecht |
| Beispiel 1 | ja / 45 | ja | 75 | 290-320 / 2 | 415-460 / 2 | gut |
| Beispiel 2 | ja / 30 | ja | 40 | 260-370 / 2 | 550-775 / 2 | gut |
| Beispiel 3 | ja / 60-65 | ja | 30 | 114-280 / 3 | 1800-2400 / 3 | gut |
| Beispiel 4 | ja / 60 | ja | 55 | 160-200 / 2 | 750-1050 / 2 | gut |
| Beispiel 5 | ja /60-65 | ja | 120 | n.b. | n.b. | gut |
| Beispiel 6 | ja / 55 | ja | 50 | 240-310 / 2 | 370-470 / 2 | gut |
| n.b. = nicht bestimmbar | | | | | | |

# EP 3 625 191 B1

**Patentansprüche**

1. Verfahren zur Herstellung einer durchgehend hydrophobierten Siliciumdioxid haltigen Wärmedämmplatte, enthaltend mindestens 50 Gew.-% Siliciumdioxid in Form einer pyrogenen Kieselsäure und/oder eines Aerogels,

   wobei die Druckspannung bei Bruch gemäß der Beschreibung gemessen an der Plattenoberfläche höher ist als die Druckspannung bei Bruch gemäß der Beschreibung gemessen an der Schnittoberfläche in dem mittleren Querschnitt der Platte parallel zur Plattenoberfläche, bei jeweils gleichen Eindringtiefen der Messsonde in den Prüfkörper,
   umfassend die folgenden Schritte:

   a) Behandlung einer hydrophilen Siliciumdioxid haltigen Platte mit einem Silicium haltigen Oberflächenmodifizierungsmittel;
   b) Trocknung und/oder thermische Behandlung der mit Oberflächenmodifizierungsmittel behandelten Platte unter Bildung einer beschichteten Platte;
   c) Hydrophobierung der beschichteten Platte mit einem Hydrophobierungsmittel.

2. Verfahren nach Anspruch 1,
   **dadurch gekennzeichnet, dass**
   das Silicium haltige Oberflächenmodifizierungsmittel aus der Gruppe bestehend aus Silicasol, Siloxan-Oligomere, Silikate und Wasserglas ausgewählt ist.

3. Verfahren nach Anspruch 1 oder 2,
   **dadurch gekennzeichnet, dass**
   in Schritt a) eine Lösung enthaltend mindestens ein Oberflächenmodifizierungsmittel und mindestens ein Lösungsmittel ausgewählt aus der Gruppe bestehend aus Wasser, Alkohole, Ether und Ester, eingesetzt wird.

4. Verfahren nach einem der Ansprüche 1 bis 3,
   **dadurch gekennzeichnet, dass**
   in Schritt a) so viel Oberflächenmodifizierungsmittel eingesetzt wird, dass in Schritt b) erzeugte Schicht eine mittlere Dicke von 100 bis 2000 $\mu$m aufweist.

5. Verfahren nach einem der Ansprüche 1 bis 4,
   **dadurch gekennzeichnet, dass**
   in Schritt c) mindestens ein Organosilan ausgewählt aus der Gruppe bestehend aus $R_n$-Si-$X_{4-n}$, $R_3$Si-Y-Si$R_3$, $R_n$-Si$_n$O$_n$, $(CH_3)_3$-Si-$(O$-Si$(CH_3)_2)_n$-OH, HO-Si$(CH_3)_2$-$(O$-Si$(CH_3)_2)_n$-OH, mit n = 1-8; R = -H, -CH$_3$, -C$_2$H$_5$; X = -Cl, -Br; -OCH$_3$, -OC$_2$H$_5$,-OC$_3$H$_8$, Y= NH, O als Hydrophobierungsmittel eingesetzt wird.

6. Verfahren nach einem der Ansprüche 1 bis 5,
   **dadurch gekennzeichnet, dass**
   Schritte a) und b) mehrmals abwechselnd hintereinander ausgeführt werden, bevor Schritt c) ausgeführt wird.

7. Verfahren nach einem der Ansprüche 1 bis 6,
   **dadurch gekennzeichnet, dass**
   nach Schritt c) zusätzlich mindestens einmal Schritt a) und/oder b) ausgeführt wird.


**Claims**

1. A method for manufacture of a throughout hydrophobed silicon dioxide-containing thermal-insulation sheet, the thermal-insulation sheet comprising at least 50 wt.-% of silicon dioxide in the form of a pyrogenic silicic acid and/or of an aerogel,

   wherein the compressive stress at break according to the specification measured on the sheet surface is higher than the compressive stress at break according to the specification measured on the sectional surface in the central cross-section of the sheet in parallel to the sheet surface at respective equal penetration depths of the measuring probe into the test specimen,
   comprising the following steps of:

a) treating a hydrophilic silicon dioxide-containing sheet with a silicon-containing surface modifying agent;

b) drying and/or thermally treating the sheet treated with a surface modifying agent while forming a coated plate;

c) hydrophobing the coated sheet with a hydrophobing agent.

**2.** The method according to claim 1,
**characterized in that**
the silicon-containing surface modifying agent is selected from the group consisting of silica sol, siloxane oligomers, silicates and water glass.

**3.** The method according to claim 1 or 2,
**characterized in that**
in step a) a solution which contains at least one surface modifying agent and at least one solvent selected from the group consisting of water, alcohols, ether and ester is used.

**4.** The method according to any one of the claims 1 to 3,
**characterized in that**
in step a) such a quantity of surface modifying agent is used that the layer produced in step b) has an average thickness ranging from 100 to 2000 $\mu$m.

**5.** The method according to any one of the claims 1 to 4,
**characterized in that**
in step c) at least one organosilane selected from the group consisting of $R_n$-Si-$X_{4-n}$, $R_3$Si-Y-Si$R_3$, $R_nSi_nO_n$, $(CH_3)_3$-Si-$(O$-Si$(CH_3)_2)_n$-OH, HO-Si$(CH_3)_2$-$(O$-Si$(CH_3)_2)_n$-OH, wherein n = 1-8; R = -H, -CH$_3$, -C$_2$H$_5$; X = -Cl, -Br; -OCH$_3$, -OC$_2$H$_5$, -OC$_3$H$_8$, Y = NH, O, is used as hydrophobing agent.

**6.** The method according to any one of the claims 1 to 5,
**characterized in that**
steps a) and b) are carried out several times alternately successively before step c) is carried out.

**7.** The method according to any one of the claims 1 to 6,
**characterized in that**
after step c) at least once step a) and/or step b) is/are additionally carried out.

**Revendications**

**1.** Procédé de fabrication d'une plaque d'isolation thermique contenant du dioxyde de silicium et rendue entièrement hydrophobe, contenant au moins 50 % en poids de dioxyde de silicium sous la forme d'un acide salicylique pyrogène et/ou d'un aérogel,
dans lequel la contrainte de compression à la rupture selon la description, mesurée sur la surface de plaque est supérieure à la contrainte de compression à la rupture selon la description, mesurée sur la surface de coupe dans la section moyenne de la plaque parallèlement à la surface de plaque, à des profondeurs de pénétration respectivement identiques de la sonde de mesure dans l'éprouvette d'essai, comportant les étapes suivantes consistant à :

a) traiter une plaque hydrophile contenant du dioxyde de silicium avec un agent de modification de surface contenant du silicium ;

b) sécher et/ou traiter thermiquement la plaque traitée avec l'agent de modification de surface en formant une plaque revêtue ;

c) rendre hydrophobe la plaque revêtue avec un agent d'hydrophobisation.

**2.** Procédé selon la revendication 1,
**caractérisé en ce que**
l'agent de modification de surface contenant du silicium est choisi parmi le groupe constitué d'un sol de silice, d'un oligomère de siloxane, de silicates et de verre soluble.

**3.** Procédé selon la revendication 1 ou 2,
**caractérisé en ce que**

à l'étape a), une solution contenant au moins un agent de modification de surface et au moins un solvant choisi parmi le groupe constitué d'eau, d'alcools, d'éthers et d'esters, est utilisée.

4. Procédé selon l'une des revendications 1 à 3,
**caractérisé en ce que**
à l'étape a), une quantité suffisante d'agent de modification de surface est utilisée de telle sorte qu'une couche générée à l'étape b) a une épaisseur moyenne de 100 à 2 000 $\mu$m.

5. Procédé selon l'une des revendications 1 à 4,
**caractérisé en ce que**
à l'étape c), au moins un organosilane choisi parmi le groupe constitué de $R_n$-Si-$X_{4-n}$, $R_3$Si-Y-Si$R_3$, $R_nSi_nO_n$, $(CH_3)_3$-Si-$(O$-Si$(CH_3)_2)_n$-OH, HO-Si$(CH_3)_2$-$(O$-Si$(CH_3)_2)_n$-OH, avec n = 1 à 8 ; R = -H, -$CH_3$, -$C_2H_5$ ; X = -Cl, -Br ; -$OCH_3$, -$OC_2H_5$, -$OC_3H_3$, Y= NH, O, est utilisé en tant qu'agent d'hydrophobisation.

6. Procédé selon l'une des revendications 1 à 5,
**caractérisé en ce que**
les étapes a) et b) sont réalisées plusieurs fois à la suite d'une manière alternée, avant de réaliser l'étape c).

7. Procédé selon l'une des revendications 1 à 6,
**caractérisé en ce que**
après l'étape c), l'étape a) et/ou b) est de plus réalisée au moins une fois.

**Figur 1**

**Figur 2**

**Figur 3**

**Figur 4**

**Figur 5a**

**Figur 5b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3037409 A
- EP 1988228 A1
- WO 2013013714 A1
- WO 2012049018 A1
- WO 2011076518 A1